# FASCICULE DE BREVET EUROPEEN

(11) **EP 0 566 508 B1**
(45) Date de publication et mention de la délivrance du brevet: **22.01.1997**
(21) Numéro de dépôt: 93420162.5
(22) Date de dépôt: 15.04.1993
(51) Int. Cl.: F16K 31/46, F16C 1/18

(54) **Dispositif de commande à distance de vannes pour canalisations, totalement enterrées**
Ferngesteuertes Gerät für Erdrohrleitungsventil
Remote-control apparatus for a valve in a buried pipeline

(30) Priorité: 17.04.1992 FR 9205191
(43) Date de publication de la demande: 20.10.1993
(73) Titulaire: BTR VALVES S.A., F-42240 Unieux (FR)
(72) Inventeur: Houselstein, Jean-Jacques, F-42000 Saint-Etienne (FR); Butigieg, Guy-Laurent, F-42100 Saint-Etienne (FR)
(74) Mandataire: Dupuis, François

(56) Documents cités:
- FR-A- 473 562
- FR-A- 582 563
- FR-A- 2 616 513
- GB-A- 914 950

## Description

L'invention se rattache au secteur technique de la réalisation de vannes et de pose de canalisations pour tous fluides et notamment gaz, eau, lesdites canalisations étant enterrées. Un dispositif selon le préambule de la revendication 1 est connu du document FR-A-2 616 513.

Les canalisations de distribution de fluides, eau, gaz, sont enterrées à une certaine profondeur pour des raisons de sécurité, ces canalisations longeant très souvent les voies, chaussées et similaires permettant le passage de véhicules.

Pour assurer la distribution du fluide, il est utilisé des vannes à partir desquelles on peut acheminer le fluide vers des endroits de distribution secondaires.

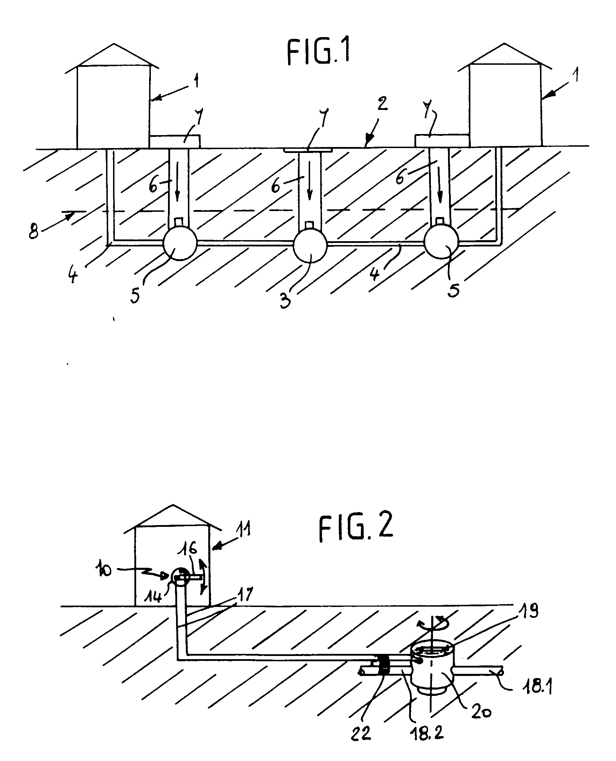

On a illustré par exemple à la figure 1, de manière schématique, des constructions (1) disposées de part et d'autre d'une chaussée (2) avec un positionnement de canalisations (3) et dérivations (4) enterrées sous une voie passante, les conduits complémentaires en dérivation permettant l'alimentation des constructions telles que maisons ou autres.

Aux endroits des dérivations ou entre les longueurs de canalisations, sont disposées des vannes (5) qui sont susceptibles d'être mises en mouvement en ouverture-fermeture, par l'intermédiaire généralement d'outils de manoeuvre sous forme de clés qui sont introduites dans des puits d'accès (6) disposés verticalement ou sensiblement dans la chaussée et débouchant sur la partie de manoeuvre du robinet de la vanne. L'introduction dans les puits d'accès s'effectue par l'intermédiaire de bouches (7) qui sont généralement situées à niveau par rapport à la chaussée.

Ce type d'installation est très classique et on utilise par exemple des vannes dites un "quart de tour" dont le tournant est susceptible de pivoter de 90° pour assurer la fermeture ou l'ouverture de la vanne. Ces vannes, selon leurs applications et conditions d'utilisation, peuvent être un robinet de ligne, un robinet de service ou un robinet de piquage en charge, les robinets étant alors aménagés et agences de manière appropriée.

Ce type d'installation bien que fiable présente néanmoins un certain nombre d'inconvénients.

Tout d'abord, lors de la réfection des rues, voies passantes et similaires, il y a lieu de dégager les bouches. Les bouches sont alors en débordement par rapport au lit de la chaussée en réfection, et il en résulte ainsi des risques non négligeables de détérioration par les engins de travaux publics utilises pour cette réfection, ainsi que des risques d'accidents pour lse usagers.

En outre, la mise à nu des bouches ou leur rehausse lors des travaux de réfection est coûteuse et nécessite une main d'oeuvre pour l'entretien. Il est par ailleurs préférable lors des opérations de travaux et de réfection de fermer toutes les canalisations de distribution de fluide, de sorte que cela crée des désagréments pour le voisinage et les personnes habitant dans les constructions situées le long des zones de réfection.

L'utilisation de bouches et de puits d'accès aux vannes exige également un contrôle technique et une surveillance des vannes car en cas de grand froid, il n'est pas exclu que ces vannes ou robinets soient détériorées par le gel. De plus, lors de la pose des robinets, il est nécessaire de positionner correctement ceux-ci (tige verticale) pour permettre la manoeuvre par le puits d'accès.

Un autre problème réside dans le fait qu'il y a lieu d'identifier très précisément les zones de passage des canalisations secondaires de distribution du fluide vers les constructions. A cet effet, on utilise des moyens de repérage constitués essentiellement par des treillis (8) généralement colorés pour faciliter leur visualisation, et enterrés à niveau intermédiaire entre les canalisations et corps de vannes et le niveau du sol.

La détection de ces treillis ne peut être réalisée que par la mise en oeuvre de tranchées à l'aide de moyens appropriés. Cela nécessite donc l'intervention de moyens mécaniques lourds ou des opérations de piochage par une main d'oeuvre entraînant encore des coûts et des pertes de temps, sans compter le risque d'effectuer plusieurs tranchées pour situer réellement la position des canalisations.

Ainsi, on constate qu'il existe un certain nombre d'inconvénients à la technique actuelle de pose des canalisations et vannes associées.

Le but selon l'invention était de remédier à ces différents inconvénients en proposant une solution nouvelle, simple, peu coûteuse, facile à mettre en oeuvre et réduisant au strict minimum les divers contrôles techniques ultérieurs après la pose et facilitant ladite pose.

Un autre but recherché selon l'invention était de concevoir un nouveau dispositif qui soit d'accès aisé et d'une manipulation facile sans entraîner des interventions en terre, toujours longues, fastidieuses et coûteuses.

Un autre but recherché était de concevoir un dispositif qui permette également un repérage et une identification très aisés du sens d'orientation des canalisations et de leur dérivation vers les zones de distribution du fluide eau ou gaz.

Un autre but selon l'invention était de concevoir un dispositif fiable dans le temps qui ne soit pas soumis aux conditions climatiques et au gel en particulier.

Ces buts et d'autres encore ressortiront bien de la suite de la description.

Selon une première caractéristique, le dispositif de commande de vannes pour canalisations totalement enterrées, lesdites vannes étant un robinet dit de "ligne", de "service" ou de "piquage" selon les utilisations, est remarquable en ce qu'il comprend des moyens de commande à distance par transmission mécanique de fermeture-ouverture du robinet dispose hors terre d'une construction extérieure,
et en ce que lesdits moyens mécaniques de transmission comprennent un câble métallique monté en continu en s'accouplant, d'une part, sur un moyen disposé sur un organe de manoeuvre disposé à l'extérieur et hors terre et, d'autre part, ledit câble de grande longueur étant enterré pour venir s'accoupler au corps de vanne en s'ajustant sur le robinet de la vanne pour assurer son ouverture-fermeture, l'action sur l'organe de manoeuvre permettant le déplacement du câble entraînant la mise en rotation du robinet et son ouverture-fermeture,
et en ce que le câble de transmission comprend un gainage du type câble de bicyclette et des sorties de gaines s'adaptant et se fixant sur le corps de vanne et/ou toute pièce associée au robinet.

Ces caractéristiques et d'autres encore ressortiront bien de la suite de la description.

Pour fixer l'objet de l'invention illustré non limitativement aux figures des dessins où :

La figure 1 est une vue à caractère schématique illustrant une installation de canalisations et dérivations vers des constructions selon l'art antérieur.

La figure 2 est une vue à caractère schématique illustrant une installation de canalisations et dérivations vers des constructions selon l'invention.

La figure 3 est une vue en perspective montrant le dispositif selon l'invention dans une première réalisation appliquée à une vanne connue dans le commerce, utilisée principalement pour les canalisations en dérivation et étant un "robinet de service" avec tournant orientable angulairement selon un quart de tour.

La figure 4 est une vue en coupe longitudinale selon la figure 3 du dispositif selon l'invention.

La figure 5 est une vue en plan selon la figure 4.

La figure 6 est une vue partielle en coupe longitudinale selon la ligne A-A de la figure 4.

La figure 7 est une vue en coupe d'une variante d'application du dispositif selon l'invention à une vanne utilisée pour les canalisations de grand débit et étant un "robinet de ligne".

La figure 8 est une vue en plan selon la ligne B-B de la figure 7.

La figure 9 est une vue en coupe transvesale selon la ligne C-C de la figure 7.

Afin de rendre plus concret l'objet de l'invention, on le décrit maintenant d'une manière non limitative aux figures des dessins.

Afin de surmonter les inconvénients rappelés selon la technique antérieure, l'invention vise une installation de vannes totalement enterrées, et dont les moyens de commande de fermeture-ouverture sont disposés hors terre, près d'une construction extérieure, lesdits moyens assurant par une commande à distance l'ouverture et la fermeture desdites vannes, celles-ci, selon leurs conditions d'utilisation comprenant un robinet dit "de service" ou "de ligne" ou de piquage.

Les moyens de commande à distance (10) sont avantageusement disposés dans un coffret (11) ou zone de protection similaire positionné extérieurement de préférence contre les murs d'une construction privée ou publique. La commande à distance de l'ouverture-fermeture des vannes peut être effectuée par des moyens de commande (12) à distance de tout type et plus particulièrement par des moyens de transmission mécaniques.

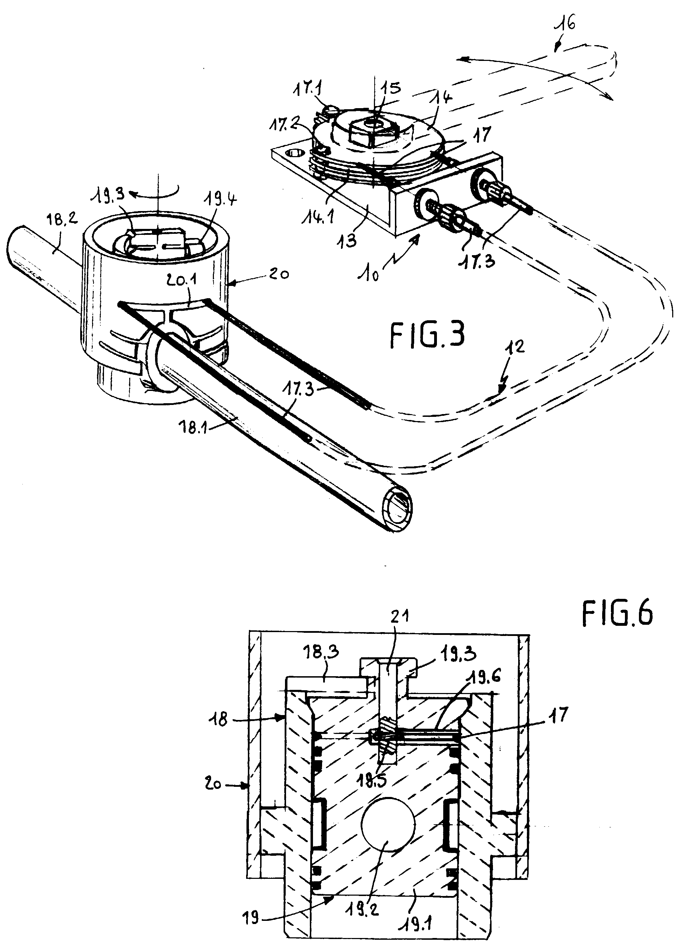

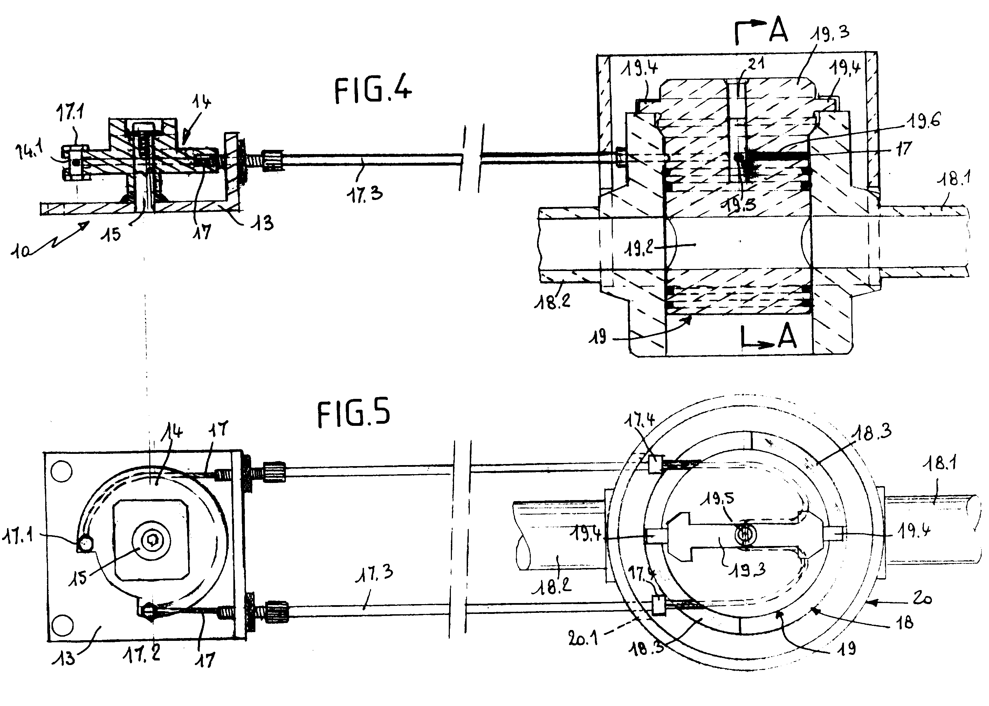

On a ainsi illustré aux figures 3 à 9 des dessins une telle réalisation.

Cette commande à distance, par un moyen mécanique de transmission, est réalisée à l'aide d'un câble monté en continu en s'enroulant, d'une part, sur un moyen disposé sur un organe de manoeuvre (13) et, d'autre part, ledit câble étant disposé pour coopérer et s'enrouler autour du robinet de la vanne pour assurer son ouverture-fermeture. Plus particulièrement, l'organe de manoeuvre (13) comprend un boîtier recevant intérieurement une poulie (14) montée sur un axe (15) à partir du carter du boîtier, ladite poulie étant mise en mouvement par un carré de manoeuvre (16), levier de multiplicateur de couple ou similaire. Cette poulie présente une gorge (14.1) permettant la fixation d'une extrémité (17.1) du câble (17) de transmission, cette dite extrémité du câble étant fixée sur les flasques ou joues de la poulie. La poulie reçoit, à position fixe, l'autre extrémité (17.2) du câble.

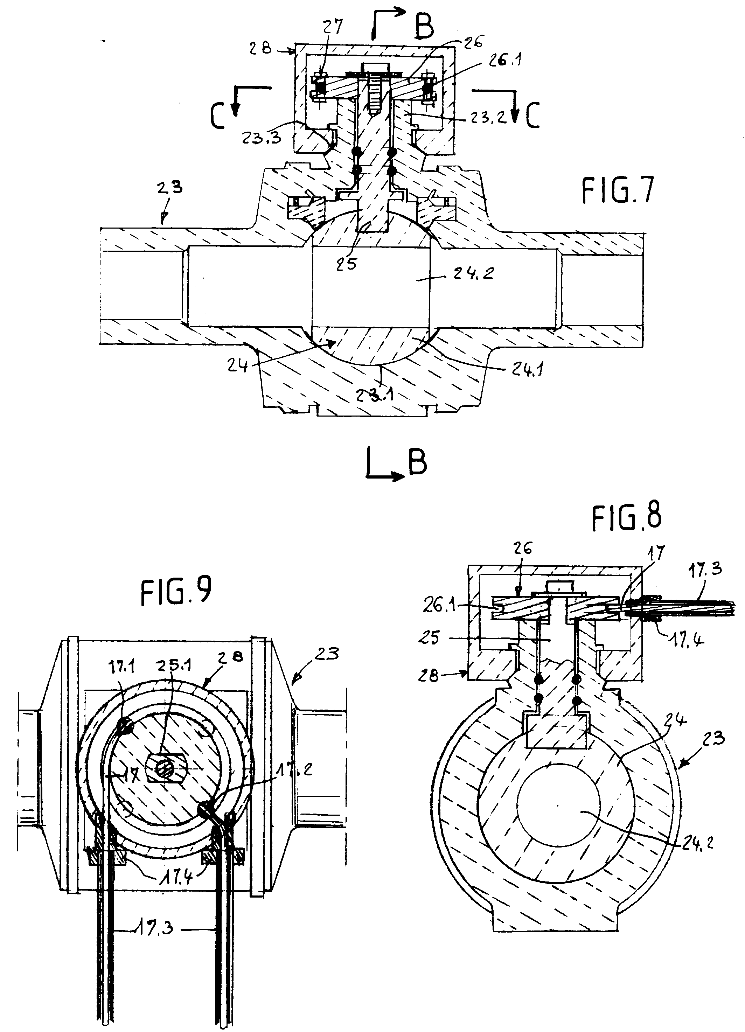

Ainsi qu'il apparaît à la figure 5, les deux extrémités d'attache (17.1 - 17.2) sont éloignées l'une de l'autre angulairement d'environ 90° correspondant ainsi à l'angulation de déplacement du robinet dans les phases d'ouverture-fermeture.

Ce câble est monté en continu et disposé dans un gainage (17.3) approprié type "câble de bicyclette". Ce câble est de grande longueur et destiné à être enterré jusqu'à venir aboutir dans le corps de vanne (18) et plus particulièrement sur la partie robinet qui doit être sollicitée en ouverture-fermeture. Plus particulièrement le câble comprend un gainage complémentaire en matériau du type connu dans le commerce sous la marque "TEFLON", et qui permet d'augmenter le rendement du système permettant le déplacement de la partie mécanique des câbles. On obtient ainsi une enveloppe extérieure métallique pouvant être détectée par tout moyen approprié,à l'intérieur de laquelle est introduit le gainage en "TEFLON" qui autorise lui-même le passage du câble proprement dit. Ladite enveloppe est recouverte d'une revêtement plastique.

En se référant aux figures 3 à 5 où l'on a illustré une vanne du type étant un robinet de service (19), pour les applications en dérivations secondaires pour la distribution de fluide. Cette vanne comprend, de manière connue, un corps (19.1) réalise généralement en matière plastique rigide telle que polyethylène. Ce corps est disposé dans un carter de protection (20) cylindrique. Ledit corps comprend diamétralement oppose des embouts ou tuyaux (18.1 - 18.2) permettant l'ajustement de conduits ou canalisations, dont la liaison et la fixation s'effectuent de manière connue. Sur sa face supérieure, le corps présente des bossages (18.3) ou saillies profilées définissant de manière connue une zone de course et de pivotement du robinet qui est inséré dans ledit corps. Ce robinet présente radialement une ouverture (19.2) pour permettre, lorsqu'elle est en alignement des embouts, le passage du fluide. A sa partie supérieure (19.3), le robinet présente une forme supérieure profilée présentant à ses extrémités des débordements (19.4) susceptibles de venir en appui sur la face supérieure du corps et en butée contre les faces verticales desdites saillies ou bossages (18.3). La forme profilée supérieure du robinet forme poignée de manoeuvre pour permettre la mise en rotation du robinet dans le corps.

De manière avantageuse, par le profil et la longueur formée sur la face supérieure du corps, la rotation du robinet est limitée à 90°, soit un quart de tour.

Selon l'invention, le câble de transmission (17) est directement inséré et associé audit robinet pour permettre sa mise en rotation.

Ainsi qu'il apparaît aux dessins, le robinet est agencé pour recevoir dans sa partie médiane longitudinale et sur une partie de sa hauteur, un axe (21) à position fixe dans un trou borgne aménagé à cet effet, ledit trou borgne ne débouchant pas néanmoins dans l'ouverture (19.2) intérieure du passage du fluide. Cet axe est engagé par la partie supérieure du robinet.

A titre complémentaire, le robinet présente une ouverture transversale (19.5), débouchante ou non, susceptible de couper et de déborder le trou de logement dudit axe (21).

L'ouverture transversale (19.5) est d'un diamètre suffisant pour permettre l'introduction du câble (17) et son enroulement autour de l'axe (21), puis le retour du câble par ladite ouverture. Celle-ci permet ainsi le logement et le déplacement des deux brins du câble selon des mouvements commandés par l'organe de manoeuvre. On obtient ainsi un brin meneur et un brin mené selon les conditions de fermeture ou d'ouverture du robinet. Le frottement du câble sur l'axe est suffisant pour permettre la mise en rotation du robinet. A l'intérieur de l'ouverture transversale (19.5), ledit câble peut être gainé ou non gainé. De préférence, le câble est nu pour faciliter son introduction et son enroulement autour de l'axe précité qui constitue ainsi un organe de renvoi du câble. Le corps de vanne (18) est alors agencé avec des fentes ou ouvertures (18.4) permettant le passage des brins du câble de manière à avoir une longueur de câble continue par rapport à l'organe de manoeuvre.

En se référant à la figure 5, on comprend ainsi que toutes manipulations de l'organe de manoeuvre va provoquer le tirage du câble dans un sens ou dans un autre, et ainsi à distance provoquer la mise en rotation d'un quart de tour du robinet. Le câble est avantageusement métallique. Le robinet peut présenter une gorge extérieure (19.6) permettant le passage et le guidage du câble lors de la rotation dudit robinet dans le corps de vanne.

La nature du câble est suffisante pour permettre une adhérence et entraînement total du robinet lors de la manoeuvre du levier de commande.

Dans cette mise en oeuvre et avantageusement, des sorties de gaine (17.4) sont judicieusement positionnées contre le corps de vanne pour assurer un parfait guidage, tandis que le boîtier (20) de protection du corps de vanne est lui-même agence avec une fente (20.1) en T pour permettre l'introduction et le passage des brins du câble.

Pour assurer un parfait guidage et un espacement continu des deux brins du câbles, il peut être prévu des moyens de bridage (22) le long des canalisations permettant ainsi d'associer lesdits brins de câble aux canalisations.

Le montage est extrêmement simple et la fiabilité de fonctionnement du dispositif est assurée et n'entraîne aucun contrôle technique particulier après mise en place.

On a illustré aux figures 7 à 9 des dessins une autre mise en oeuvre du dispositif sur des vannes de conception différente utilisées sur des canalisations de diamètre plus important et étant du type "robinet de ligne".

Le dispositif selon l'invention reste le même mais sa mise en place sur ce type de vanne présente quelques différences étant considéré qu'il y avait lieu de réduire au maximum les modifications de fabrication des différents composants de ce type de vanne. Il permet en outre l'adaptation sur des robinets déjà installés, pourvu que ceux-ci soient du type "quart de tour".

La vanne est illustrée dans son ensemble par (23) et comprend un robinet de ligne (24). De manière connue, ce robinet comprend une embase sphérique (24.1) présentant une ouverture transversale (24.2) autorisant le passage du fluide, ladite embase étant logée dans une forme sphérique (23.1) complémentaire formée dans le corps de vanne. L'embase est prolongée par une pièce profilée (25) disposée verticalement et solidarisée à elle pour assurer son entraînement en rotation. Cette pièce (25) formant prolongateur centrée à étanchéité par des joints toriques (26) et similaires, est guidée dans un manchon (23.2) débordant vers le haut formé directement sur le corps de vanne. Le prolongateur présente de manière connue à son extrémité extérieure haute une forme à pans coupés (25.1), susceptible de coopérer avec une clé de manoeuvre.

Selon l'invention, ledit prolongateur est agencé pour recevoir à l'endroit de la zone présentant les pans coupés une bague profilée (26) agencée intérieurement avec un alésage (26.2) complémentaire pour s'ajuster sur lesdits pans coupés, ladite bague présentant extérieurement une gorge (26.1) permettant l'enroulement du câble. Ladite bague est agencée pour recevoir à position fixe les extrémités (17.1 - 17.2) des brins du câble de transmission. Lesdites extrémités sont fixées par des vis ou attaches (27) de tout type sur la bague. Un capuchon (28) est rapporté autour de la bague et du manchon support du prolongateur pour venir avantageusement se clipser sur des formes en saillie (23.3) formées sur ledit manchon afin d'assurer la protection des mécanismes de mise en mouvement du robinet. On comprend ainsi que l'adaptation du dispositif est extrêmement simple et d'un coût minime, même sur les robinets type "quart de tour" déjà installés.

Les avantages ressortent bien de l'invention. On souligne en particulier la nouvelle conception du contrôle et agencement des installation de distribution de fluide eau-gaz, par une commande à distance. Les moyens de transmission qui peuvent être mécaniques sont alors enterrés et associés par bridage par exemple le long des canalisations et dérivations. Leur détection est extrêmement aisée puisque, dans la mise en oeuvre décrite, cette transmission s'effectue à l'aide d'un moyen mécanique tel qu'un câble et il est possible, par des moyens de détection portables disposés extérieurement, d'identifier la zone de positionnement desdits câbles, sans pour cela réaliser des tranchées.

La commande des moyens de transmission se fait par l'extérieur hors des zones de réfection et il n'y a donc aucune détérioration possible des canalisations ou des corps de vannes. La mise en application du dispositif selon l'invention est aisée aussi bien pour les installations existantes que pour les nouvelles installations.

L'invention est particulièrement avantageuse pour l'équipement des installations en milieux urbains.

## Revendications

1. Dispositif de commande de vannes pour canalisations totalement enterrées, lesdites vannes étant un robinet dit de "ligne", de "service" ou de "piquage" selon les utilisations, comprenant des moyens de commande à distance (12) par transmission mécanique de fermeture-ouverture du robinet disposé hors terre d'une construction extérieure,
caractérisé en ce que lesdits moyens mécaniques de transmission comprennent un câble métallique (17) monté en continu en s'accouplant, d'une part, sur un moyen (14) disposé sur un organe de manoeuvre (13) disposé à l'extérieur et hors terre et, d'autre part, ledit câble de grande longueur étant enterré pour venir s'accoupler au corps de vanne (18 - 23) en s'ajustant sur le robinet (19-25) de la vanne pour assurer son ouverture-fermeture, l'action sur l'organe de manoeuvre permettant le déplacement du câble entraînant la mise en rotation du robinet et son ouverture-fermeture,
et en ce que le câble de transmission comprend un gainage du type câble de bicyclette et des sorties de gaines (17.4) s'adaptant et se fixant sur le corps de vanne et/ou toute pièce associée au robinet.

2. Dispositif selon la revendication 1, caractérisé en ce que l'organe de manoeuvre (13) comprend un boîtier recevant intérieurement une poulie (14) montée sur un axe (15) solidaire du boîtier, ladite poulie étant mise en mouvement par un moyen de manoeuvre (16), et présentant une gorge (14.1) permettant l'enroulement du câble, ladite poulie étant agencée pour recevoir à fixation les deux extrémités (17.1 - 17.2) du câble (17) monté en continu par rapport au robinet de la vanne.

3. Dispositif selon la revendication 2, caractérisé en ce que les deux extrémités d'attache (17.1 - 17.2) du câble sur le moyen (14) sont éloignées l'une de l'autre de 90° correspondant à l'angulation de déplacement du robinet dans les phases d'ouverture-fermeture.

4. Dispositif selon l'une quelconque des revendications 1 à 3, dans son application à une vanne du type comprenant un robinet de service (19) et similaire, ladite vanne comprenant un corps (19.1) disposé dans un carter de protection (20) cylindrique, ledit corps comprenant diamétralement opposé des embouts (18.1 - 18.2) d'ajustement de conduits ou canalisations, ledit corps présentant des bossages (18.3) sur sa face supérieure déifnissant une zone de course et de pivotement du robinet (19) inséré dans le corps, ledit robinet présentant une ouverture (19.2) de passage de fluide et, à sa partie supérieure, des débordements (19.4) venant en butée sur la face supérieure du corps pour limiter la manoeuvre de déplacement du robinet, caractérisé en ce que le robinet (19) est agencé pour recevoir dans sa partie médiane longitudinale et sur une partie de sa hauteur, un axe (21) à position fixe dans un trou borgne, et une ouverture transversale (19.5) débouchante dans le trou borgne précité et en débordement de celui-ci,
et en ce que l'ouverture transversale (19.5) permet l'introduction du câble (17) et son enroulement autour de l'axe (21) et le retour du câble par ladite ouverture (19.5), celle-ci permettant ainsi le logement et le déplacement des deux brins du câble selon des mouvements commandés par l'organe de manoeuvre.

5. Dispositif selon la revendication 4, caractérisé en ce que le robinet présente une gorge extérieure (19.6) permettant le passage et le guidage du câble lors de la rotation du robinet dans le corps de vanne.

6. Dispositif selon la revendication 4, caractérisé en ce que des sorties de gaine (17.4) du câble (17) sont positionnées contre le corps de vanne, ledit câble étant nu dans son introduction et son passage dans ledit robinet.

7. Dispositif selon la revendication 6, caractérisé en ce que le corps de vanne (18) est agencé avec des fentes (18.4) permettant le passage des brins du câble, le boîtier de protection (20) du corps de vanne étant agencé avec une fente (20.1) profilée permettant l'introduction et le passage des brins du câble.

8. Dispositif selon l'une quelconque de revendications 1 à 3, dans son application à une vanne du type robinet de ligne (24) ou similaire, ledit robinet comprenant une embase sphérique (24.1) présentant une ouverture transversale (24.2) autorisant le passage de fluide, ladite embase étant logée dans une forme sphérique (23.1) complémentaire formée dans le corps de vanne, ladite embase étant prolongée par une pièce profilée (25) verticale formant prolongateur guidé dans un manchon (23.2) débordant vers le haut forme sur le corps de vanne, ledit prolongateur présentant à son extrémité surpérieure haute une forme à pans coupés (25.1), caractérisé en ce que ledit prolongateur est agencé pour recevoir, au niveau de ses pans coupés, une bague profilée (26) agencée intérieurement avec un alésage (26.2) complémentaire pour s'ajuster sur lesdits pans coupés, ladite bague présentant extérieurement une gorge (26.1) permettant l'enroulement du câble (17), ladite bague étant agencée pour recevoir à position fixe les extrémités (17.1-17.2) des brins du câble de transmission et leur attache par des moyens (27).

9. Dispositif selon la revendication 8, caractérisé en ce qu'un capuchon (28) est rapporté autour de la bague (26) et du manchon support (23.2) du prolongateur (25) pour se clipser sur des formes en saillie (23.3) formées sur ledit manchon afin d'assurer, la protection du mécanisme de mise en mouvement du robinet.

10. Dispositif selon la revendication 1, caractérisé en ce que le câble métalique est inséré dans un gainage en un matériau du type commercialisé sous la dénomination "TEFLON", ledit gainage étant lui-même inséré dans une enveloppe extérieure métallique recouverte par une protection plastique.

## Patentansprüche

1. Vorrichtung für die Steuerung von Absperrhähnen an unterirdischen Rohrleitungen mit ,,Leitungsabsperr-" und ,,Versorgungshähnen". Fernsteuerung durch mechanische Transmission zum Öffnen und Schließen der unterirdisch angebrachten Absperrhähne für einen Außenbau.
Die mechanische Transmissionsvorrichtung erfolgt durch ein durchgehendes Drahtkabel, das mit einer an einem oberirdischen Bediensystem angebrachten Vorrichtung (14) verbunden ist. Dieses Drahtkabel ist bis zu dem an den eigentlichen Hahn (19 - 25) angeschlossenen Hauptkörper des Absperrhahns (18 - 23) eingegraben. Es ermöglicht den Öffnungs- und Schließvorgang. Die Betätigung des Bediensystems ermöglicht die Bewegung des Kabels, was zur Drehung des Hahns und zur Öffnung und Schließung führt.
Die Beschichtung des Drahtkabels ist ähnlich wie bei einem Fahrrad und ist mit Muffenausgängen (17.4) ausgestattet, die an dem Hauptkörper des Absperrhahns und / oder irgendeinem anderen mit dem Hahn verbundenen Teil befestigt sind.

2. Vorrichtung entsprechend Anforderung 1, charakterisiert durch das Bediensystem (13), ist mit einem Kasten und einer Rolle innen ausgestattet und auf eine Achse (15) mit dem Kasten montiert. Die Rolle wird von einer Vorrichtung (16) bewegt und besitzt eine Rille (14.1), um die Wicklung des Drahtkabels zu ermöglichen. Die Rolle ist so beschaffen, daß sie beide Enden des vom Absperrhahn aus durchgehend angebrachten Kabels (17.1 - 17.2) aufnimmt.

3. Vorrichtung entsprechend Anforderung 2, charakterisiert durch zwei Kabelanschlüsse (17.2) an das System (14), mit 90°-Winkel, was dem Bewegungswinkel des Hahns beim Öffnen und Schließen entspricht.

4. Verwendung der Vorrichtung an einem ,,Versorgungshahn", dessen Hauptkörper (19.1) von einem zylindrischen Schutzgehäuse (20) umgeben ist, mit zwei Enden (18.1-18.2), diametral entgegengesetzt, passend zu Rohrleitungen. An dem oberen Teil des Hauptkörpers sind Auslässe, die einen Fließ- und Drehbereich des in den Hauptkörpers eingebauten Hahns (19) festlegen. Der Hahn hat einen Fließweg (19.2) und hat an seinem oberen Teil Ausbuchtungen (19.4), die gegen den oberen Teil des Hauptkörpers stoßen, um die Bewegung des Hahns einzuschränken.
Ein Charakteristikum: Der Hahn ist so gestaltet, daß er an seinem Mittelteil (Längsseite) und an einer bestimmten Stelle an der Hochseite eine feste Positionsachse (21) in einem Blindloch aufnimmt sowie eine Queröffnung (19.5), die das Blindloch freigibt.
Diese Queröffnung (19.5) ermöglicht die Einführung des Drahts (17), seine Wicklung um die Achse (21) und seine Herausführung durch dieselbe Öffnung (19.5). So wird die Anbringung und Bewegung der beiden Kabelzüge entsprechend den vom Bediensystem gesteuerten Bewegungen.

5. Vorrichtung entsprechend -4-: Es ist eine Außenrille (19.6) für die Führung und Steuerung des Drahtkabels bei der Drehung des Hahns in dem Hauptkörper des Absperrhahns vorhanden.

6. Vorrichtung entsprechend -4-: Kabelmuffenausgänge (17.4) sind an dem Hauptkörper des Absperrhahns angebracht, während der Draht beim Eintritt in den Hahn und beim Lauf durch den Hahn nicht ummantelt ist.

7. Vorrichtung entsprechend -6-: Der Hauptkörper des Absperrhahns (18) ist mit Nuten (18.4) für die Führung des Kabelzugs versehen. Das Schutzgehäuse (20) ist mit einer Profilnut (20.1) für die Einführung und den Lauf der Kabelzüge versehen.

8. Vorrichtung entsprechend -1-, -2- oder -3-: Verwendung für einen "Leitungsabsperrhahn" (24), mit einer kugelförmigen Basis (24.1) mit Seitenöffnung (24.2) für den Flüssigkeitslauf. Diese Basis befindet sich in einer weiteren in den Hauptkörper geformten Kugel (23.1). An die Basis schließt sich ein senkrechtes mit einem Profil versehenes Teil (25) mit einer Nut (23.2) als Führung an, das als Erweiterung verwendet wird und auf dem oberen, auf den Hauptkörper geformten Teil hervortritt.
Der obere Teil der Erweiterung hat Schnittränder. Er nimmt in Höhe der Schnittränder einen mit einem Profil versehenen Ring (26) auf, der innen so gebohrt ist (26.2), daß er den Schnitträndern angepaßt ist. An der Außenseite des Rings befindet sich eine Rille (26.1) für die Kabelwicklung. In fixierter Position kann der Ring die Enden (17.1 - 17.2) der Transmissionskabelzüge und Anschlüsse aufnehmen.

9. Vorrichtung entsprechend -8-: Eine Kappe (28) um den Ring (26) und die stützende Rille (23.2) der Erweiterung (25) ist zum Schutz des Bewegungsmechanismus des Hahns an vorstehenden Teilen (23.3) auf der Muffe befestigt.

10. Vorrichtung entsprechend -1-: Das Drahtkabel ist in ein ,,TEFLON"-Gehäuse eingebaut. Dieses Gehäuse befindet sich in einer mit einem Kunststoffschutz beschichteten metallenen Außenmuffe.

## Claims

1. Valve control device for fully buried pipings with «line», « service » valves or valves with picking. this is a remote control, through mechanical transmission, for the opening-closing operation ofthe valves, placed overground, for an external building.
The mechanical transmission device is made by wire cable, mounted *en continu,* coupling to a device (14) placed on an overground handling system This wire cable is buried to get to the valve body (18-23), adjusted on the cock (19-25) of the valve to ensure the opening-closing operation. The action on the handling system enables the moving of the cable, leading to the rotation ofthe cock and the opening-closing operation.
The wire cable is coated with a bicycle -type coating and is fitted with sleeve outlets (17.4) fixed to the valve body and /or any other part associated to the cock.

2. Device according to revendication 1, characterised by the handling system (13) is fitted with a box and a pulley inside, mounted on an axis (15) integral with the box The pulley is moved by a device (16) and is grooved (14.1) to enable the winding of the wire cable. This pulley is designed to receive both ends of the cable (17.1-17.2) mounted *en continu* from the valve cock.

3. Device according to revendication 2, characterised by the two cable connections (17.1-17.2) on the system (14), separated 90° width, which corresponds to the moving angulation ofthe cock during the opening-closing operations.

4. Application of the device to a « service » valve, which body (19.1) is placed in a cylindrical protection housing (20).with two ends (18.1-18.2), diametrically opposed, fitting to pipings. There are outlets on the upper part of the body, defining a flowing and pivoting area of the cock (19) inserted in the valve body. The cock has a fluid running path (19.2) and protrusions (19.4) on is upper part, thrusting against the upper part of the valve body to limit the motion of the cock.
One characteristic : the cock is designed to receive on its longitudinal medium part and at some part of its height an fixed position axis (21) in a blind hole, as well as a transversal opening (19.5) giving way and protruding the blind hole.
This transversal opening (19.5) enables the introduction of the wire (17),its winding around the axis (21) and its return by this same opening (19.5). Thus it enables the placing and moving of both cable strands, according to the moves controlled by the handling system.

5. Device according to -4-.: there is an external groove (19.6) for the running and the control ofthe wire cable during the rotation ofthe cock in the valve body.

6. Device according to -4- :cable sleeve outlets (17.4) are placed against the valve body, as the wire is naked when coming into and running through the cock.

7. Device according to -6- : the valve body (18) is designed with slots (18.4) for the running of the cable strands. The protection housing (20) is designed with a profiled slot (20.1) for the introduction and the running ofthe strands.

8. Device according to -1-, -2- or -3- : application to a « line » valve (24) , with a spherical base (24.1) with a side opening (24.2) for the running of the fluid. This base is placed in another sphere (23.1) shaped in the valve body and is continued by a vertical profiled part (25) lead by a sleeve (23.2) used as an extension, protruding on the upper part shaped on the valve body. The upper part of the extension has cut edges. It is designed to receive, at the level of the cut edges, a profiled ring (26) bored inside (26.2) to fit with the cut edges. On the outside of the ring, there is a groove (26.1) for the cable winding. At fixed position, the ring can receive the ends (17.1-17.2) ofthe transmission cable strands and connections

9. Device according to -8- : a cap (28) around the ring (26) and the support sleeve (23.2) of the extension (25) is clipsed on protruded parts (23.3) on the sleeve in order-to ensure the protection of the cock moving mechanism.

10. Device according to -1- : the wire cable is inserted into a housing made of « TEFLON ». This housing is put inside a metallic external sleeve coated with a plastic protection
